Europäisches Patentamt

European Patent Office

Office européen des brevets

(19)

(11) **EP 0 857 385 B1**

(12) **FASCICULE DE BREVET EUROPEEN**

(45) Date de publication et mention
de la délivrance du brevet:
**30.10.2002 Bulletin 2002/44**

(21) Numéro de dépôt: **96920903.0**

(22) Date de dépôt: **05.06.1996**

(51) Int Cl.⁷: $H04L\ 27/00$, $H04B\ 14/02$

(86) Numéro de dépôt international:
**PCT/FR96/00848**

(87) Numéro de publication internationale:
**WO 97/016008 (01.05.1997 Gazette 1997/19)**

(54) **DISPOSITIF ET PROCEDE DE COMMUNICATION NUMERIQUE-ANALOGIQUE**

VERFAHREN UND VORRICHTUNG ZUR DIGITAL-ANALOGEN NACHRICHTENÜBERTRAGUNG

DIGITAL-TO-ANALOG COMMUNICATION DEVICE AND METHOD

(84) Etats contractants désignés:
**AT BE CH DE DK ES FI FR GB GR IE IT LI LU MC
NL PT SE**
Etats d'extension désignés:
**LT LV**

(30) Priorité: **23.10.1995 FR 9512672**

(43) Date de publication de la demande:
**12.08.1998 Bulletin 1998/33**

(73) Titulaire: **MOTOROLA INC.
Schaumburg, IL 60196-3750 (US)**

(72) Inventeur: **HUMBLET, Pierre
F-06400 Cannes (FR)**

(74) Mandataire: **Kopacz, William James et al
83, Avenue Foch
75116 Paris (FR)**

(56) Documents cités:
**EP-A- 0 669 740          WO-A-96/18261
DE-C- 3 416 818          US-A- 4 385 379
US-A- 5 265 125**

• **PATENT ABSTRACTS OF JAPAN vol. 001, no.
100 (E-042), 5 Septembre 1977 & JP,A,52 033410
(HITACHI LTD), 14 Mars 1977,**

**Description**

La présente invention concerne un dispositif de communication hybride numérique-analogique, sur un canal téléphonique.

La croissance du parc d'ordinateurs personnels installés et l'éclosion de nouveaux services télématiques témoignent du potentiel de croissance du volume des communications en ligne. Alors que la situation actuelle est satisfaisante pour les gros utilisateurs qui sont à même de connecter leurs réseaux internes à des services extérieurs par l'intermédiaire de réseaux de transmission à haut débit ou de lignes louées, le coût de telles solutions est trop élevé pour de petites entreprises ou des particuliers.

Il apparaît certain que cette situation va évoluer, et que la nécessité de distribuer des services impliquant un débit de transmission élevé jusque vers les résidences des particuliers, sera à l'origine d'un réseau à large bande généralisé. Mais un tel réseau a peu de chances d'être déployé de façon universelle avant plusieurs années, voire dizaines d'années.

En attendant la disponibilité d'un tel réseau à haut débit, les particuliers, les écoles, les petites entreprises doivent se résoudre à transmettre des données sur le réseau téléphonique. Pour cela, ils ont le choix entre deux technologies connues. La solution la plus répandue consiste à utiliser des modems fonctionnant à un débit de 14,4 Kb/s ou 28,8 Kb/s. Une solution plus onéreuse consiste à utiliser le réseau RNIS, qui possède deux canaux de données à 64 Kb/s et un canal de signalisation à 16 Kb/s. Cependant cette deuxième solution n'est pas disponible partout, et nécessite un investissement important pour les utilisateurs sous la forme de tarifs d'abonnement plus élevés et de matériel de communication adapté.

Le document EP-A-0 669 740 décrit un modem à échantillonnage à niveau de quantisation (QLS) destiné à un réseau téléphonique numérique. Ce modem comprend des moyens pour égaliser séparément chaque boucle du réseau de sorte que, dans le sens de la transmission du modem vers le central, les échantillons de tension vus par le codeur/décodeur (CODEC) sont équivalents aux niveaux de quantisation du réseau transmis par le modem.

L'invention a pour but de proposer une troisième alternative, qui soit en mesure d'utiliser les avantages d'un réseau comme par exemple le réseau RNIS, et notamment une vitesse de transmission plus élevée, de l'ordre de 64 Kb/s, tout en n'entraînant pas de surcoût notable pour les utilisateurs par rapport au coût des solutions classiques fonctionnant à 14,4 Kb/s.

A cet effet, l'invention concerne un dispositif de communication entre un adaptateur numérique relié à un central par l'intermédiaire d'une interface numérique, notamment de type RNIS, et un adaptateur analogique relié à un central par l'intermédiaire d'une interface analogique, lesdits centraux étant reliés par l'intermédiaire d'un réseau de télécommunications, caractérisé en ce qu'il comporte des moyens de liaison directe entre l'adaptateur numérique et l'adaptateur analogique, l'information numérique de l'adaptateur numérique étant envoyée à l'adaptateur analogique, et réciproquement, sous forme numérique sans émuler un signal analogique.

Selon d'autres caractéristiques de l'invention:

- lesdits moyens de liaison directe comportent, dans le sens de transmission allant de l'adaptateur numérique vers l'adaptateur analogique, un transmetteur numérique situé dans l'adaptateur numérique et apte à transmettre à un récepteur analogique situé dans l'adaptateur analogique, des impulsions analogiques dont les niveaux de tension représentent l'information transmise de l'adaptateur numérique vers l'adaptateur analogique;

- lesdits moyens de liaison directe comportent, dans le sens de transmission allant de l'adaptateur analogique vers l'adaptateur numérique, un transmetteur analogique situé dans l'adaptateur analogique et apte à transmettre à un récepteur numérique situé dans l'adaptateur numérique, un signal analogique tel que lors de son échantillonnage par l'interface analogique du central, vaudra un niveau de quantification déterminé par une information numérique transmise par l'adaptateur analogique à l'adaptateur numérique;

- le récepteur analogique comporte un égaliseur linéaire adaptatif connecté en entrée à la sortie d'un convertisseur analogique/numérique, et connecté en sortie à l'entrée d'un égaliseur de sortie relié à l'équipement de l'utilisateur, de sorte que la réponse en sortie de 1' égaliseur linéaire adaptatif est une réponse de classe IV.

- ledit égaliseur de sortie est un égaliseur à retour de décision ou un égaliseur de Viterbi.

- le transmetteur de l'adaptateur analogique comporte un codeur de ligne suivi d'un filtre de prédistortion qui synthétise une réponse partielle de classe IV.

- lesdits moyens comportent, du côté de l'adaptateur numérique, un sélecteur de n niveaux, n étant notamment égal à 64, représentés sous la forme d'un octet, parmi N = 256 niveaux de quantification possibles, ledit sélecteur de niveaux étant connecté en entrée à l'équipement de l'utilisateur et en sortie à une interface numérique;

- l'adaptateur numérique comporte un décodeur de ligne et de canal connecté en entrée à la sortie d'un convertisseur linéaire utilisant une loi de conversion de type A, et connecté en sortie à l'équipement de l'utilisateur.

L'invention concerne également un procédé de transmission directe entre un adaptateur analogique et un adaptateur numérique, de façon bidirectionnelle. Dans le sens de transmission allant de l'adaptateur numérique vers l'adaptateur analogique, ce procédé est caractérisé en ce qu'il comporte des étapes consistant à:

- prendre un groupe de bits provenant d'une source de données numériques, par exemple un groupe de 6 bits;
- choisir un parmi n (n= 64) niveaux présélectionnés parmi N (notamment N = 256) niveaux de tension, chaque niveau étant représenté sous forme numérique par un octet;
- envoyer successivement les octets correspondant à la sélection d'un parmi n niveaux à travers le réseau numérique vers un adaptateur analogique, de façon à produire dans l'adaptateur analogique des signaux dont l'amplitude est sensiblement égale aux niveaux représentés par chaque octet, les signaux correspondant à des octets successifs interférant les uns avec les autres pour produire dans l'adaptateur analogique un signal analogique résultant;
- égaliser ledit signal analogique résultant de façon à éliminer les interférences;
- mesurer l'amplitude du signal analogique résultant et en déduire la valeur numérique de l'octet;
- à partir de la valeur numérique de l'octet, reconstituer le groupe de bits et l'envoyer à un récepteur de données numériques.

Le procédé de transmission d'un adaptateur analogique vers un adaptateur numérique dans un système de communication, est caractérisé en ce qu'il comporte les étapes consistant à:

- prendre un groupe de bits provenant d'une source de données connectée au système de communication;
- sélectionner un signal analogique ayant une amplitude correspondant à la valeur numérique du groupe de bits, les signaux correspondant à des groupes successifs interférant les uns avec les autres et ayant une forme telle qu'au moment où le signal analogique est échantillonné dans l'interface analogique de la centrale, sa valeur soit sensiblement égale à un niveau de quantification parmi N niveaux de quantification prédéterminés, de sorte que suite à l'échantillonnage du signal analogique, un octet apparaisse dans l'adaptateur numérique, représentant ledit niveau de quantification;
- traiter les octets successifs de façon à éliminer l'interférence entre les signaux successifs et retrouver la valeur des groupes de bits.
- transmettre la valeur numérique des groupes de bits retrouvés à l'équipement de l'utilisateur.

L'invention sera mieux comprise à la lecture de la description suivante faite à titre d'exemple non limitatif, et aux dessins ci-annexés, dans lesquels:

- la figure 1 représente un schéma de principe du dispositif de communication mettant en oeuvre l'invention;
- la figure 2 représente un graphe du débit de transmission maximal pour une loi de quantification de type A, en fonction de la distance minimale entre les n niveaux choisis de quantification;
- la figure 3 représente un schéma de principe d'un adaptateur numérique adapté au dispositif selon l'invention;
- la figure 4 représente un schéma de principe d'un adaptateur analogique adapté au dispositif selon l'invention;

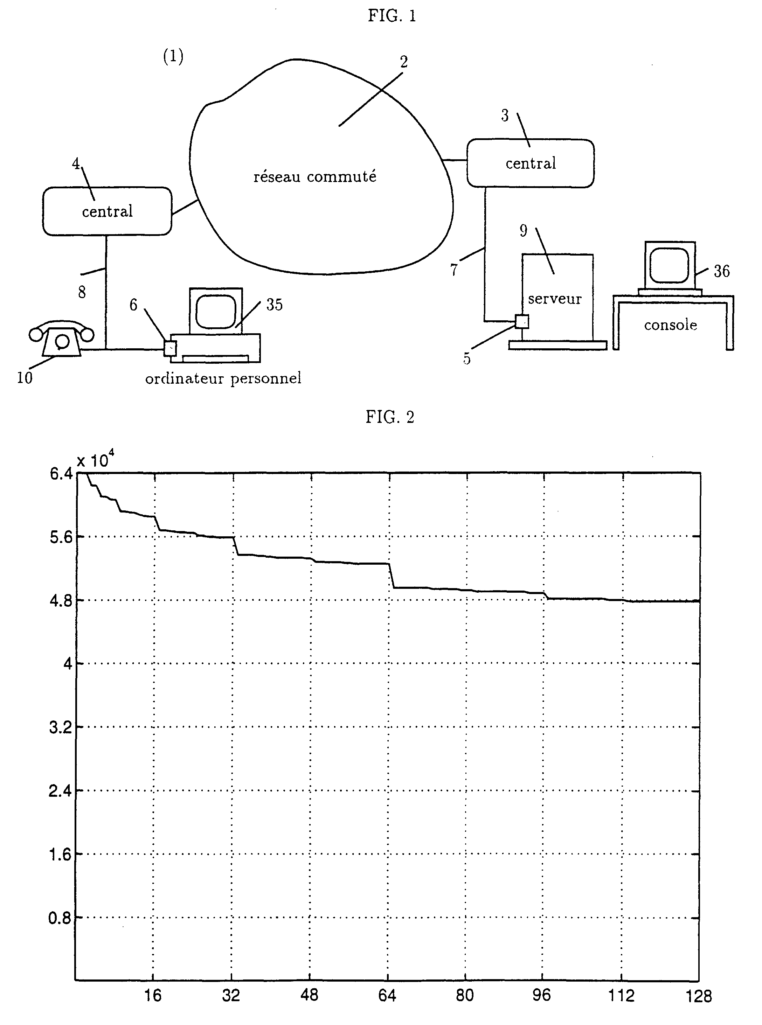

On se réfère à la figure 1. On a représenté dans cette figure l'architecture générale d'un dispositif de communication 1 utilisant un réseau commuté public 2 pour les transmissions entre deux centraux 3,4 reliés respectivement, d'un premier côté, à un adaptateur numérique 5 par une interface numérique 7, et de l'autre côté, à un adaptateur 6 dit analogique, c'est-à-dire connecté par une simple interface téléphonique classique 8.

Un serveur numérique 9, qui est par exemple un serveur hébergeant des applications à haut débit, est connecté au central numérique 3 par une ligne 7 et un adaptateur numérique 5 du serveur 9.

Le terminal 35 est notamment sous la forme d'un ordinateur personnel connecté à l'adaptateur analogique 6. L'adaptateur et un téléphone 10 sont connectés par la simple ligne téléphonique 8 au central 4. Sur la ligne analogique 8 transitent donc des informations analogiques: la voix de l'utilisateur du téléphone 10, ou des informations numériques issues de ou dirigées vers l'adaptateur analogique 6.

Grâce à cette architecture, qui est connue dans le cas où l'adaptateur analogique est un modem classique, il est possible d'appeler une ligne analogique classique 8 à partir d'un serveur 9, et réciproquement. Cette possibilité est déjà utilisée pour transmettre de la parole ou des données. Quand le signal numérique en provenance d'un adaptateur numérique 5 arrive, après son transport par le réseau 2, jusqu'au central téléphonique 4, les octets du signal numérique sont transformés, par un convertisseur numérique/analogique intégré au central 4, en des niveaux de tension, et ceci avec une fréquence d'échantillonnage qui est normalement de 8000 fois par seconde. Cette conversion numérique/ analogique (N/A) a lieu suivant une loi de conversion, par exemple la loi "A" en Europe, ou la loi « μ » dans d'autres parties du monde. Dans l'autre direction, c'est-à-dire dans le sens de l'adaptateur analogique 6 vers l'adaptateur numérique 5, la tension analogique reçue par le central 4 est numérisée par un échantillonneur et représentée par des octets. Ces octets, après transport par le réseau 2, sont transmis à l'adaptateur numérique 5.

Globalement, une connexion telle que celle décrite ci-dessus permet à un adaptateur numérique 5 de communiquer avec un adaptateur analogique 6. Traditionnellement, l'adaptateur numérique 5 envoie une séquence d'octets qui, après une transformation utilisant une loi précitée, correspondent à un signal de parole, ou à un signal de modem classique. Ce signal est alors traité normalement, dans le cas de la téléphonie, il est directement transmis à l'écouteur du combiné téléphonique 10. De façon similaire, l'adaptateur analogique 6 est traditionnellement constitué par un modem. Les opérations inverses sont effectuées dans l'autre direction de transmission.

L'invention propose une autre méthode de transmission entre un adaptateur analogique 6 et un adaptateur numérique 5, et un dispositif correspondant.

Le principe de l'invention est expliqué en liaison avec la figure 2, qui représente le compromis qui existe entre la vitesse de transmission (en kilobits/seconde sur l'échell des ordonnées) et la résistance au bruit. Si l'on souhaite transmettre à 64 Kb/s, tous les 256 niveaux de quantification possibles à partir de huit bits ($2^8 = 256$) doivent être utilisés. Cependant, pour une transmission soumise à un bruit Gaussien, la probabilité d'erreur au cours de la transmission dépend de la distance minimale $d_{min}$ (en abscisse de la figure 2) entre deux niveaux adjacents de l'échelle de quantification, et cette relation est représentée dans la figure 2, pour une loi de conversion de type A. On constate de façon surprenante qu'en augmentant la distance minimale $d_{min}$ entre niveaux de 2 à 4, on ne perd pas la moitié des niveaux de quantification, mais seulement 33 niveaux sur 256. Il en résulte de façon similaire qu'une transmission à environ 48 Kb/s reste possible en n'utilisant que 64 niveaux de quantification séparés d'une distance de $d_{min} = 128$.

Les étapes du procédé de transmission dans les deux sens sont alors les suivantes,quand le signal analogique est quantifié par rapport à n = 64 niveaux, permettant un débit de 48 Kb/s.

Pour le procédé de transmission d'un adaptateur numérique vers un adaptateur analogique, les étapes du procédé comprennent les étapes suivantes:

- prendre un groupe de bits provenant d'une source de données numériques, par exemple un groupe de 6 bits;
- choisir un parmi n (notamment n= 64) niveaux présélectionnés parmi N (notamment N = 256) niveaux de tension, chaque niveau étant représenté sous forme numérique par un octet transmis 8000 fois par seconde;
- envoyer successivement les octets correspondant à la sélection de n niveaux à travers le réseau numérique vers un adaptateur analogique, de façon à produire dans l'adaptateur analogique des signaux dont l'amplitude est sensiblement égale aux niveaux représentés par chaque octet, les signaux correspondant à des octets successifs interférant les uns avec les autres pour produire dans l'adaptateur analogique un signal analogique résultant;

- égaliser ledit signal analogique résultant de façon à éliminer les interférences;
- mesurer l'amplitude du signal analogique résultant et en déduire la valeur numérique de l'octet;
- à partir de la valeur numérique de l'octet, reconstituer le groupe de bits et l'envoyer à un récepteur de données numériques.

Le procédé de transmission d'un adaptateur analogique vers un adaptateur numérique dans un système de communication, comporte les étapes consistant à:

- prendre 8000 fois par seconde un groupe de bits provenant d'une source de données connectée au système de communication;
- sélectionner un signal analogique ayant une amplitude correspondant à la valeur numérique du groupe de bits, les signaux correspondant à des groupes successifs interférant les uns avec les autres, et ayant une forme telle qu'au moment où le signal analogique est échantillonné dans l'interface analogique de la centrale 4, sa valeur soit sensiblement égale à un niveau de quantification parmi N niveaux de quantification prédéterminés, de sorte que suite à l'échantillonnage du signal analogique, un octet apparaisse dans l'adaptateur numérique, représentant ledit niveau de quantification;
- traiter les octets successifs de façon à éliminer l'interférence entre les niveaux successifs et retrouver la valeur des groupes de bits.
- transmettre la valeur numérique des groupes de bits retrouvés à l'équipement de l'utilisateur 9 du terminal numérique.

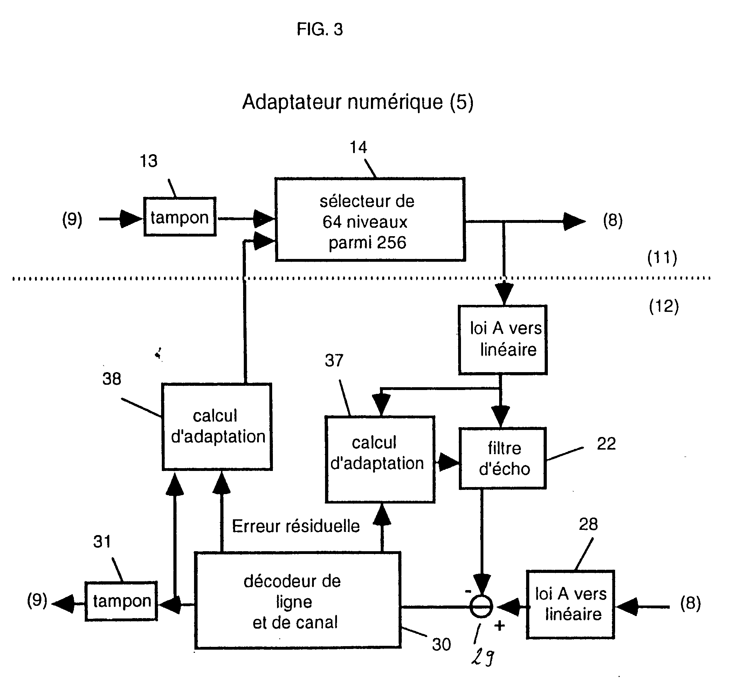

En somme, le procédé de transmission n'essaye pas de reconstruire un signal analogique pour la transmission sur la ligne vers l'adaptateur analogique. Au contraire, les octets qui représentent l'information numérique sont directement transformés en niveaux de tension, comme illustré par le dispositif correspondant dans la partie supérieure de la figure 3, qui concerne la partie transmission de l'adaptateur numérique 5. Par exemple, pour communiquer à 48 kb/s, l'adaptateur numérique 5 transforme les bits reçus de l'utilisateur en groupes de 6 bits représentatifs de niveaux de tension (soit $2^6 = 64$ possibilités), envoyés 8000 fois par seconde, et représentant l'un parmi les 256 niveaux de la loi de conversion. Les 64 niveaux ainsi utilisés dans cet exemple sont choisis de manière à être séparés les uns des autres autant que possible pour fournir une meilleure résistance au bruit. Cette séparation est appelée la distance minimale $d_{min}$ dans la suite. L'intérêt de cette approche est d'éliminer le bruit de quantification introduit par la loi de conversion.

Il est à noter que l'on peut également envisager de façon connue en soi, d'utiliser de la modulation codée en treillis pour obtenir une meilleure résistance au bruit.

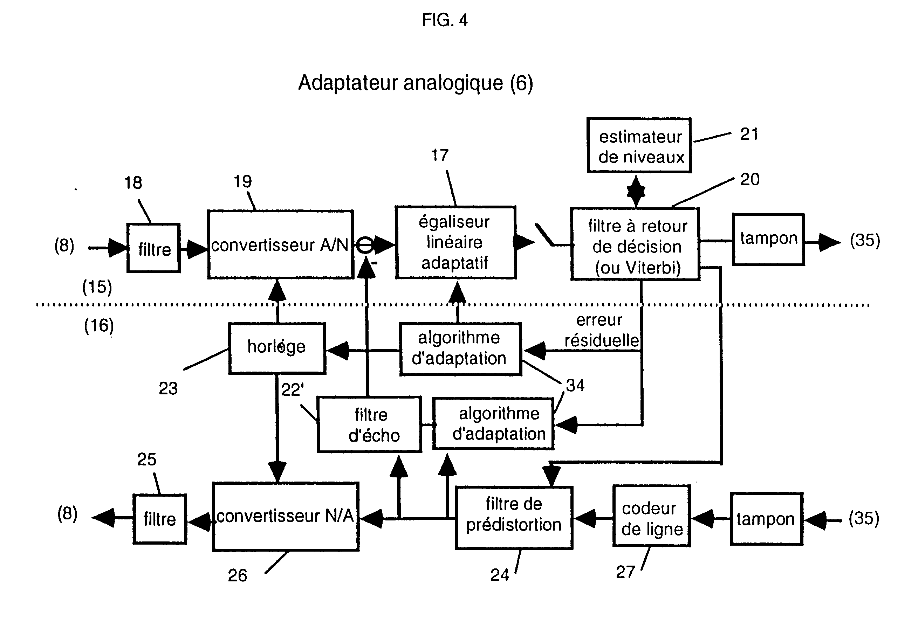

Pour l'interfaçage avec l'interface 7, l'adaptateur numérique 5 comporte principalement une partie supérieure (au-dessus du trait interrompu horizontal) constituée par un transmetteur numérique 11, et une partie inférieure 12 constituée par un récepteur numérique. L'entrée du transmetteur numérique 11 est alimentée par une source de données numériques, comme par le serveur 9 (figure 1). L'entrée du transmetteur numérique 11 qui voit passer des octets représentant l'information numérique issue du serveur 9, est reliée, à travers un tampon 13 si une adaptation de débit est nécessaire, à l'entrée d'un sélecteur de niveaux 14, dont la sortie constitue la sortie du transmetteur numérique 11 de l'adaptateur numérique 5. Cette sortie du transmetteur numérique 11 de l'adaptateur numérique 5 est connectée, à travers le réseau 2, à l'entrée de la partie réception de l'adaptateur analogique 6, qui est représentée en partie supérieure 15 de la figure 4, la partie transmission de l'adaptateur analogique 6 étant représentée par la partie inférieure 16 de la figure 4.

Le récepteur 15 de l'adaptateur analogique 6 reçoit en entrée (au haut de la figure 4), une série d'impulsions analogiques dont les niveaux de tension représentent l'information transmise par l'adaptateur numérique de la figure 3. La présence de filtres dans la centrale téléphonique 4 provoque de l'interférence entre les impulsions successives. Il est donc difficile de les reconnaître et de mesurer leurs niveaux.

Le récepteur analogique 15 de l'invention qui est illustré dans la partie supérieure de la Figure 4, se compose de deux parties principales: un filtre linéaire numérique adaptatif 17 qui "égalise" le signal, transformant l'impulsion distordue provenant du réseau à travers un filtre 18 et un convertisseur analogique/numérique 19, en une impulsion bien contrôlée qui n'introduit de l'interférence qu'entre des niveaux pairs (ou impairs) successifs. Plus précisément, la sortie $Y_n$ du filtre d'égalisation 17 au temps n est donnée par l'expression:

$$Y_n = X_n - X_{n-2}$$

où les $X_n$ sont les niveaux envoyés par l'adaptateur numérique 5.

Ce système d'égalisation est connu en soi comme une "réponse partielle de classe IV". L'invention permet d'appliquer une telle réponse à une situation de communication directe entre un adaptateur numérique 5 et un adaptateur analogique 6.

Pour éviter la propagation d'erreur au récepteur, l'utilisation d'un codage différentiel en 14 est recommandée, comme bien connu en soi.

Par ailleurs, si le filtre linéaire d'égalisation 17 doit être adaptatif, son choix est à la portée de l'homme du métier.

A ce point, il reste à éliminer l'interférence entre symboles qui est exprimée par la relation $Y_n = X_n - X_{n-2}$. A cet effet, deux techniques connues sont utilisables: l'égalisation à retour de décision (DFE) et l'algorithme de Viterbi, représentées par le bloc fonctionnel 20.

Les niveaux $X_n$ produits par le central téléphonique 4 ne sont pas toujours égaux à leurs niveaux nominaux prévus par la loi de quantification. Le récepteur analogique 15 doit donc estimer la valeur réelle des $X_n$, et ces valeurs réelles doivent être utilisées dans l'égaliseur à retour de décision, ou l'égaliseur de Viterbi 20. L'estimation peut être faite en utilisant une des variations de l'algorithme des moindres carrés, implémenté dans un bloc fonctionnel 21.

Il est à noter que les valeurs réelles des $X_n$ doivent aussi être utilisées dans un annuleur d'écho 22 de l'adaptateur numérique (figure 3). A cet effet, l'adaptateur numérique 5 peut lui aussi procéder à une estimation des valeurs réelles à l'aide d'un bloc fonctionnel similaire au bloc 21 de la figure 4, ou bien utiliser des informations de contrôle correspondantes transmises par l'adaptateur analogique 6. Les liaisons correspondantes ne sont pas représentées dans les figures par simplicité.

Dans l'autre direction de transmission de données, c'est-à-dire de l'adaptateur analogique 6 vers l'adaptateur numérique 5, le transmetteur 16 de l'adaptateur analogique illustré au bas de la Figure 4 utilise l'horloge 23 du terminal 6, qu'il a récupérée dans sa section réceptrice 15. Le but de la partie de transmission 16 de l'adaptateur analogique 6 est de produire un signal analogique qui, lors de son échantillonnage, vaudra l'un des niveaux nominaux de la loi de quantification, le niveau en question étant déterminé par l'information numérique transmise par l'adaptateur numérique 5.

L'invention prévoit que la réponse impulsionnelle entre l'adaptateur analogique 6 et la centrale 4 soit mesurée par l'adaptateur numérique 5, et communiquée à l'adaptateur analogique 6 par des messages de contrôle. Sur la base de ces mesures, l'adaptateur analogique 6 synthétise un filtre numérique 24 pour que la réponse totale (ligne 8 + filtres) soit à nouveau une réponse partielle de classe IV. Cette technique est appelée une "prédistortion". Le filtre 24 a aussi un rôle accessoire, celui de produire un signal à un rythme de 16 kHz, notamment à partir d'une entrée à 8 kHz provenant de l'adaptateur analogique 6, pour faciliter la conception du filtre analogique 25 qui suit le convertisseur N/A 26, qui produit un signal analogique à partir d'un signal numérique.

Grâce à l'utilisation du filtre de prédistortion 24, l'équation $Y_n = X_n - X_{n-2}$ est de nouveau applicable,

où $Y_n$ désigne cette fois le signal à la centrale 4 et $X_n$ le niveau de sortie du transmetteur analogique 16. Il est nécessaire que $Y_n$ corresponde à un des niveaux de la loi de quantification $S_j$ pour réduire l'influence du bruit. Par conséquent, la relation suivante doit être

vérifiée:

$$X_n = X_{n-2} + S_j$$

Si on ne prend pas de précautions, suivre cette relation peut conduire à de trop grandes valeurs pour $X_n$. De nombreuses techniques, connues sous le nom de « codage de ligne » sont disponibles pour résoudre ce problème, par exemple sous la forme d'un codeur de ligne 27. A ce point, l'homme du métier pourra aisément en choisir une en particulier.

L'adaptateur analogique doit aussi éliminer son propre écho, de la même manière que l'adaptateur numérique 5. Les techniques à cet effet sont bien connues et une implémentation apparaît dans la Figure 4, sous la forme d'un filtre d'écho 22.

A la centrale 4, le signal $Y_n$ (le cas échéant corrompu par du bruit) est quantifié et encodé en un octet qui est transmis à la partie réceptrice 12 de l'adaptateur numérique 5, illustrée au bas de la Figure 3. Là, les octets sont transformés en niveaux linéaires par le bloc de conversion linéaire 28 (utilisant par exemple la loi de conversion A), et l'écho du signal émis par le transmetteur numérique 11 est soustrait en 29, comme représenté dans la Figure 3. Le signal résultant est alors traité par un algorithme de Viterbi dans le bloc fonctionnel 30, ou par un système à retour de décision, et la sortie du bloc 30 est transmise, éventuellement à travers un tampon 31, à l'utilisateur de l'adaptateur numérique 5.

Comme représenté en figure 3, le signal d'erreur (différence entre le signal reçu et le signal idéal) dans le bloc 30 de l'algorithme de Viterbi ou du système à retour de décision, est utilisé pour adapter l'annuleur d'écho 22, et pour estimer l'erreur due à une mauvaise synthèse du filtre de prédistortion 24 dans l'adaptateur analogique 6. L'information de correction (encodée en un bas débit) est multiplexée dans le sélecteur de niveaux 14 avec l'information en provenance de l'utilisateur connecté à l'entrée de l'adaptateur numérique 5 (canal de service), et transmise à l'adaptateur analogique 6. Elle est utilisée dans l'adaptateur analogique pour adapter le filtre de prédistortion 24.

Comme représenté en figure 4, le signal d'erreur dans le bloc 20 correspondant à l'algorithme de Viterbi ou du système à retour de décision est utilisé par les algorithmes d'adaptation 34 pour ajuster le filtre d'écho 22', l'égaliseur linéaire adaptatif 17 et l'horloge locale 23.

Il est évident que comme dans les communications modems classiques, des séquences de reconnaissance et d'apprentissages doivent être échangées lorsque la communication est établie. Elles servent à initialiser les horloges et les filtres adaptatifs. On doit aussi prévoir que l'une ou l'autre des centrales téléphoniques 3,4 peut utiliser soit la loi A soit la loi $\mu$, et s'adapter on conséquence.

Il résulte de ce qui précède que l'invention atteint ses objectifs, et permet de relier une ligne numérique à une ligne analogique pour envoyer directement et de façon économique de l'information numérique, sans avoir à émuler un signal analogique. Ceci permet de réaliser des transmissions à un débit sensiblement égal à celui d'une ligne numérique à relativement haut débit, tout en utilisant pour la transmission une ligne de téléphone normale.

## Revendications

**1.** Dispositif de communication entre un adaptateur numérique (5) relié à un central (3) par l'intermédiaire d'une interface numérique (7), notamment de type RNIS, et un adaptateur analogique (6) relié à un central (4) par l'intermédiaire d'une interface analogique (8), lesdits centraux (3,4) étant reliés par l'intermédiaire d'un réseau de télécommunications (2), **caractérisé en ce qu'**il comporte des moyens (11,12;15,16) de liaison directe entre l'adaptateur numérique (5) et l'adaptateur analogique (6), l'information numérique de l'adaptateur numérique (5) étant envoyée à l'adaptateur analogique (6) directement sous forme numérique sans émuler un signal analogique et l'information analogique de l'adaptateur analogique (6) étant envoyée à l'adaptateur numérique (5) directement sous forme analogique.

**2.** Dispositif de communication selon la revendication 1, **caractérisé en ce que** lesdits moyens (11,12; 15,16) de liaison directe comportent, dans le sens de transmission allant de l'adaptateur numérique (5) vers l'adaptateur analogique (6), un transmetteur numérique (11) situé dans l'adaptateur numérique (5) et apte à transmettre à un récepteur analogique (15) situé dans l'adaptateur analogique (6), des impulsions analogiques dont les niveaux de tension représentent l'information transmise de l'adaptateur numérique (5) vers l'adaptateur analogique (6).

**3.** Dispositif de communication selon la revendication 1 ou 2, **caractérisé en ce que** lesdits moyens (11,12;15,16) de liaison directe comportent, dans le sens de transmission allant de l'adaptateur analogique (6) vers l'adaptateur numérique (5), un transmetteur analogique (16) situé dans l'adaptateur analogique (6) et apte à transmettre à un récepteur numérique (12) situé dans l'adaptateur numérique (5), un signal analogique tel que lors de son échantillonnage par l'interface analogique du central (4), vaudra un niveau de quantification déterminé par une information numérique transmise par l'adaptateur numérique (5) à l'adaptateur analogique (5).

**4.** Dispositif de communication selon la revendication 2 ou 3, **caractérisé en ce que** le récepteur analogique (6) comporte un égaliseur linéaire adaptatif (17) connecté en entrée à la sortie d'un convertisseur analogique/numérique (19), et connecté en sortie à l'entrée d'un égaliseur de sortie (20) relié à l'équipement de l'utilisateur, de sorte que la réponse en sortie de l' égaliseur linéaire adaptatif (17) est une réponse de classe IV.

5. Dispositif de communication selon la revendication 4, **caractérisé en ce que** ledit égaliseur de sortie (20) est un égaliseur à retour de décision, ou un égaliseur de Viterbi.

6. Dispositif de communication selon la revendication 2, **caractérisé en ce que** le transmetteur (16) de l'adaptateur analogique (6) comporte un codeur de ligne (27) suivi d'un filtre de prédistortion (24) qui synthétise une réponse partielle de classe IV.

7. Dispositif de communication selon la revendication 1, **caractérisé en ce que** lesdits moyens (11,12) comportent, du côté de l'adaptateur numérique (5), un sélecteur (14) de n niveaux, n étant notamment égal à 64, représentés sous la forme d'un octet, parmi N = 256 niveaux de quantification possibles, ledit sélecteur de niveaux (14) étant connecté en entrée à l'équipement de l'utilisateur et en sortie à une interface numérique.

8. Dispositif de communication selon la revendication 7, **caractérisé en ce que** l'adaptateur numérique (5) comporte un décodeur de ligne et de canal (30) connecté en entrée à la sortie de l'interface numérique de l'adaptateur numérique (6), ledit décodeur de ligne et de canal (30 étant connecté en sortie à l'équipement de l'utilisateur (9).

9. Procédé de transmission d'un adaptateur numérique (5) vers un adaptateur analogique (6) dans un réseau de communication numérique, **caractérisé en ce qu'**il comporte les étapes consistant à:

   - prendre un groupe de bits provenant d'une source de données numériques (5), par exemple un groupe de 6 bits;
   - choisir un parmi n (n = 64) niveaux présélectionnés parmi N (notamment N = 256) niveaux de tension, chaque niveau étant représenté sous forme numérique par un octet;
   - envoyer successivement les octets correspondant à la sélection de un parmi n niveaux à travers le réseau numérique vers un adaptateur analogique (6), de façon à produire dans l'adaptateur analogique (6) des signaux dont l'amplitude est sensiblement égale aux niveaux représentés par chaque octet, les signaux correspondant à des octets successifs interférant les uns avec les autres pour produire dans l'adaptateur analogique un signal analogique résultant;
   - égaliser ledit signal analogique résultant de façon à éliminer les interférences;
   - mesurer l'amplitude du signal analogique résultant et en déduire la valeur numérique de l'octet;
   - à partir de la valeur numérique de l'octet, reconstituer le groupe de bits et l'envoyer à un récepteur (12) de données numériques.

10. Procédé de transmission d'un adaptateur analogique (6) vers un adaptateur numérique (5) dans un système de communication, **caractérisé en ce qu'**il comporte les étapes consistant à:

   - prendre un groupe de bits provenant d'une source de données (6) connectée au système de communication;
   - sélectionner un signal analogique ayant une amplitude correspondant à la valeur numérique du groupe de bits, les signaux correspondant à des groupes successifs interférant les uns avec les autres et ayant une forme telle qu'au moment où le signal analogique est échantillonné dans l'interface analogique (8) de la centrale (4), sa valeur soit sensiblement égale à un niveau de quantification parmi N niveaux de quantification prédéterminés, de sorte que suite à l'échantillonnage du signal analogique, un octet apparaisse dans l'adaptateur numérique (5), représentant ledit niveau de quantification;
   - traiter les octets successifs de façon à éliminer l'interférence entre les niveaux successifs et retrouver la valeur des groupes de bits.
   - transmettre la valeur numérique des groupes de bits retrouvés à l'équipement de l'utilisateur.

**Claims**

1. Device for effecting communication between a digital adapter (5) connected to an exchange (3) by means of a digital interface (7), in particular of the ISDN type, and an analogue adapter (6) connected to an exchange (4) by means of an analogue interface (8), the said exchanges (3, 4) being connected by means of a telecommunications network (2), **characterised in that** the device comprises means (11, 12; 15, 16) for direct linkage between the digital adapter (5) and the analogue adapter (6), the digital information from the digital adapter (5) being passed to the analogue adapter (6) directly in digital form without emulating an analogue signal, and the analogue information from the analogue adapter (6) being passed to the digital adapter (5) directly in analogue form.

**2.** Communication device according to claim 1, **characterised in that** the said direct linkage means (11, 12; 15, 16) comprise, in the direction of transmission from the digital adapter (5) to the analogue adapter (6), a digital transmitter (11) arranged in the digital adapter (5) and capable of transmitting to an analogue receiver (15) arranged in the analogue adapter (6) analogue pulses whose voltage levels represent the information transmitted from the digital adapter (5) to the analogue adapter (6).

**3.** Communication device according to claim 1 or 2, **characterised in that** the said direct linkage means (11, 12; 15, 16) comprise, in the direction of transmission from the analogue adapter (6) to the digital adapter (5), an analogue transmitter (16) arranged in the analogue adapter (6) and capable of transmitting to a digital receiver (12) arranged in the digital adapter (5) an analogue signal such that when the signal is sampled by the analogue interface of the exchange (4) it will have a quantification level determined by digital information transmitted by the digital adapter (5) to the analogue adapter (6).

**4.** Communication device according to claim 2 or 3, **characterised in that** the analogue receiver (6) comprises an adaptive linear equaliser (17) whose input is connected to the output of an analogue/digital converter (19), and whose output is connected to the input of an output equaliser (20) connected to the user's equipment so that the output response of the adaptive linear equaliser (17) is a class IV response.

**5.** Communication device according to claim 4, **characterised in that** the said output equaliser (20) is a decision return equaliser or a Viterbi equaliser.

**6.** Communication device according to claim 2, **characterised in that** the transmitter (16) of the analogue adapter (6) comprises a line encoder (27) followed by a predistortion filter (24) that synthesises a class IV partial response.

**7.** Communication device according to claim 1, **characterised in that** the said means (11, 12) comprise, as regards the digital adapter (5), a selector (14) for selecting n levels, n being in particular equal to 64, represented in the form of an octet, from N = 256 possible quantification levels, the input of the said level selector (14) being connected to the user's equipment and the output being connected to a digital interface.

**8.** Communication device according to claim 7, **characterised in that** the digital adapter (5) comprises a line and channel decoder (30) whose input is connected to the output of the digital interface of the digital adapter (6), the output of the said line and channel decoder (30) being connected to the user's equipment (9).

**9.** Process for effecting transmission from a digital adapter (5) to an analogue adapter (6) in a digital communication network, **characterised in that** it comprises the steps consisting of:

- taking a group of bits originating from a digital data source (5), for example a group of 6 bits;
- selecting one from n (n = 64) preselected levels from N (in particular N = 256) voltage levels, each level being represented in digital form by an octet;
- successively passing the octets corresponding to the selection of one from n levels via the digital network to an analogue adapter (6) so as to produce in the analogue adapter (6) signals whose amplitude is substantially equal to the levels represented by each octet, the signals corresponding to the successive octets interfering with one another to produce a resultant analogue signal in the analogue adapter;
- equalising the said resultant analogue signal so as to eliminate the interferences;
- measuring the amplitude of the resultant analogue signal and deriving therefrom the digital value of the octet;
- reconstituting from the digital value of the octet the group of bits and passing the latter to a digital data receiver (12).

**10.** Process for effecting transmission from an analogue adapter (6) to a digital adapter (5) in a communication system, **characterised in that** it comprises the steps consisting of:

- taking a group of bits originating from a data source (6) connected to the communication system;
- selecting an analogue signal having an amplitude corresponding to the digital value of the group of bits, the signals corresponding to successive groups interfering with one another and having a form such that, at the moment when the analogue signal is sampled in the analogue interface (8) of the exchange (4), its value is substantially equal to one quantification level among N predetermined quantification levels, so that following the sampling of the analogue signal an octet appears in the digital adapter (5) representing the said quantification level;
- treating the successive octets so as to eliminate the interference between the successive levels and retrieve the value of the groups of bits;
- transmitting the digital value of the retrieved groups of bits to the user's equipment.

**Patentansprüche**

1. Vorrichtung zur Kommunikation zwischen einem digitalen Adapter (5), der mittels einer digitalen Schnittstelle (7), die insbesondere zum ISDN-Typ gehört, an eine Vermittlungsstelle (3) angeschlossen ist, und einem analogen Adapter (6), der über eine analoge Schnittstelle (8) an eine Vermittlungsstelle (4) angeschlossen ist, wobei die besagten Vermittlungsstellen (3, 4) über ein Telekommunikationsnetzwerk (2) miteinander verbunden sind, **dadurch gekennzeichnet, dass** die Vorrichtung Mittel (11, 12; 15, 16) für eine direkte Verbindung zwischen dem digitalen Adapter (5) und dem analogen Adapter (6) umfasst und die digitalen Informationen des digitalen Adapters (5) direkt in digitaler Form an den analogen Adapter (6), ohne ein analoges Signal zu emulieren, übertragen werden und die analogen Informationen des analogen Adapters (6) direkt an den digitalen Adapter (5) in analoger Form übertragen werden.

2. Kommunikationsvorrichtung nach Anspruch 1, **dadurch gekennzeichnet, dass** die besagten Mittel (11, 12; 15, 16) für eine direkte Verbindung in der Übertragungsrichtung ausgehend von dem digitalen Adapter (5) zu dem analogen Adapter (6) einen digitalen Sender (11) umfassen, der sich in dem digitalen Adapter (5) befindet und geeignet ist, um an einen analogen Empfänger (15), der sich in dem analogen Adapter (6) befindet, analoge Impulse zu übertragen, deren Spannungspegel die Information darstellen, die von dem digitalen Adapter (5) zu dem analogen Adapter (6) übertragen wird.

3. Kommunikationsvorrichtung nach Anspruch 1 oder 2, **dadurch gekennzeichnet, dass** die besagten Mittel (11, 12; 15, 16) für eine direkte Verbindung in der Übertragungsrichtung ausgehend von dem analogen Adapter (6) zu dem digitalen Adapter (5) einen analogen Sender (16) umfassen, der sich in dem analogen Adapter (6) befindet und geeignet ist, um an einen digitalen Empfänger (12), der sich in dem digitalen Adapter (5) befindet, ein solches analoges Signal zu übertragen, das während seiner Abtastung durch die analoge Schnittstelle der Vermittlungsstelle (4) einem Quantisierungspegel entspricht, die von einer digitalen Information definiert wird, welche von dem digitalen Adapter (5) zu dem analogen Adapter (6) übertragen wird.

4. Kommunikationsvorrichtung nach Anspruch 2 oder 3, **dadurch gekennzeichnet, dass** der analoge Adapter (6) eine adaptive, lineare Entzerrerschaltung (17) umfasst, die mit ihrem Eingang an den Ausgang eines Analog-Digital-Wandlers (19) angeschlossen ist und mit ihrem Ausgang an den Eingang einer Ausgangsentzerrerschaltung (20) angeschlossen ist, die wiederum mit der Anlage des Benutzers verbunden ist, so dass die Wiedergabe am Ausgang der adaptiven, linearen Entzerrerschaltung (17) eine Wiedergabe der Klasse IV ist.

5. Kommunikationsvorrichtung nach Anspruch 4, **dadurch gekennzeichnet, dass** die besagte Ausgangsentzerrerschaltung (20) eine Entzerrerschaltung mit Entscheidungsrückführung oder eine Viterbi-Entzerrerschaltung ist.

6. Kommunikationsvorrichtung nach Anspruch 2, **dadurch gekennzeichnet, dass** der Sender (16) des analogen Adapters (6) einen Leitungskodierer (27) gefolgt von einem Vorverzerrungsfilter (24) enthält, der eine partielle Antwort der Klasse IV synthetisiert.

7. Kommunikationsvorrichtung nach Anspruch 1, **dadurch gekennzeichnet, dass** die besagten Mittel (11, 12) auf der Seite des digitalen Adapters (5) einen Wähler (14) für n Pegel umfasst, wobei n insbesondere gleich 64 ist, die in Form eines Bytes dargestellt werden, und zwar unter N = 256 möglichen Quantisierungspegeln, wobei der besagte Pegelwähler (14) mit seinem Eingang an die Anlage des Benutzers und mit seinem Ausgang an eine digitale Schnittstelle angeschlossen ist.

8. Kommunikationsvorrichtung nach Anspruch 7, **dadurch gekennzeichnet, dass** der digitale Adapter (5) einen Leitungs- und Kanaldekodierer (30) umfasst, der mit seinem Eingang an den Ausgang der digitalen Schnittstelle des digitalen Adapters (5) angeschlossen ist, und der besagte Leitungs- und Kanaldekodierer (30) mit seinem Ausgang an die Anlage des Benutzers (9) angeschlossen ist.

9. Verfahren zur Übertragung von einem digitalen Adapter (5) zu einem analogen Adapter (6) in einem digitalen Kommunikationsnetzwerk, **dadurch gekennzeichnet, dass** es die folgenden Schritte umfasst:

   - Erfassung einer Gruppe von Bits, die von einer Quelle mit digitalen Daten (5) kommen, zum Beispiel eine Gruppe von 6 Bits;
   - Auswahl eines Pegels von n (n = 64) vorher eingestellten Pegeln aus N Spannungspegeln (mit N insbesondere gleich 256), wobei jeder Pegel in digitaler Form durch ein Byte dargestellt ist;
   - sukzessive Übertragung der Bytes, die jeweils der Auswahl eines Pegels von n Pegeln entsprechen, über das digitale Netzwerk zu einem analogen Adapter (6), und zwar dergestalt, dass in dem analogen Adapter (6) Signale erzeugt werden, deren Amplitude im Wesentlichen gleich den Pegeln ist, die durch jedes Byte dargestellt werden, wobei die Signale, die den sukzessive aufeinander folgenden Bytes entsprechen, sich untereinander überlagern, um in dem analogen Adapter ein resultierendes analoges Signal zu erzeugen;

- Entzerrung des besagten resultierenden analogen Signals, um Interferenzen zu eliminieren;

- Messung der Amplitude des resultierenden analogen Signals und Ableitung des digitalen Werts des Bytes aus dem Messwert;

- Rekonstruktion der Gruppe von Bits auf der Grundlage des digitalen Werts des Bytes und Übertragung der Gruppe an einen Empfänger (12) für digitale Daten.

10. Verfahren zur Übertragung von einem analogen Adapter (6) zu einem digitalen Adapter (5) in einem Kommunikationssystem, **dadurch gekennzeichnet, dass** es die folgenden Schritte umfasst:

- Erfassung einer Gruppe von Bits, die von einer Datenquelle (6) kommen, welche an das Kommunikationssystem angeschlossen ist;

- Auswahl eines analogen Signals mit einer Amplitude, die dem digitalen Wert der Gruppe von Bits entspricht, wobei die Signale sukzessive aufeinander folgenden Gruppen entsprechen, die sich untereinander überlagern und eine solche Form haben, dass ihr Wert in dem Augenblick, in dem das analoge Signal in der analogen Schnittstelle (8) der Vermittlungsstelle (4) abgetastet wird, im Wesentlichen gleich einem Quantisierungspegel aus N vorher festgelegten Pegeln ist, so dass nach der Abtastung des analogen Signals ein Byte in dem digitalen Adapter (5) erscheint, das den besagten Quantisierungspegel darstellt;

- Verarbeitung der sukzessive aufeinander folgenden Bytes dergestalt, dass die Interferenz zwischen den sukzessive aufeinander folgenden Pegeln eliminiert und der Wert der Bitgruppen wieder ermittelt wird.

- Übertragung des digitalen Werts der wieder ermittelten Bitgruppen zu der Anlage des Benutzers.

FIG. 1

(1)

réseau commuté

2

3 central

4 central

9

7

serveur

36

console

8

6

35

10

ordinateur personnel

5

FIG. 2

FIG. 3

Adaptateur numérique (5)

EP 0 857 385 B1

FIG. 4

## Adaptateur analogique (6)

EP 0 857 385 B1